# EUROPEAN PATENT APPLICATION

(11) **EP 2 696 603 A2**
(43) Date of publication of application: **12.02.2014**
(21) Application number: 13179703.7
(22) Date of filing: 08.08.2013
(51) Int. Cl.: H04W 4/00, H04L 29/08, H04L 29/06, H04M 1/725, H04W 88/02, H04B 5/00

(54) **Apparatus and method for communicating data in mobile device having near field communication module**

(30) Priority: 09.08.2012 KR 20120087027
(71) Applicant: Samsung Electronics Co., Ltd, Gyeonggi-do 443-742 (KR)
(72) Inventor: Cho, Joonho, 443-742 Gyeonggi-do (KR)
(74) Representative: Nederlandsch Octrooibureau

(57) **Abstract**

The present disclosure relates to an apparatus and a method for communicating data and, more particularly, to an apparatus and a method for communicating data enabling portable terminals to transmit and receive a message by using an NFC module. According to an exemplary embodiment of the present disclosure, a method for communicating data with an external device by using an NFC (Near Field Communication) module in a portable terminal having the NFC module includes: detecting a notification event from the NFC module notifying contact of the external device; deciding whether a preregistered message to be transmitted to the external device exists in a storage unit if the notification event is detected; and controlling the NFC module to transmit the preregistered message to the external device if the registered message exists in the storage unit.

## Description

### TECHNICAL FIELD

The present disclosure relates to an apparatus and a method for communicating data and, more particularly, to an apparatus and a method for communicating data enabling portable terminals to transmit and receive a message by using an NFC module.

### BACKGROUND

Near Field Communication (NFC) is a data communication technology in a Peer-to-peer (P2P) method based on ISO/IEC18092 (NFCIP-1). By using the NFC, two portable terminals can exchange a message by contacting each other (for example, closer than 4cm distance). NFC forum supervising this technology defines a Logical Link Control Protocol (LLCP) and a Simple NDEF Exchange Protocol (SNEP) as NFC P2P transmission protocols. In particular, the SNEP is an application layer protocol, and a relatively simple protocol enabling transmission of an NFC Data Exchange Format (NDEF) message defined by the NFC forum.

Android Beam is an NFC P2P function supported in an Android platform, and provides an Application Programming Interface (API) enabling an application of a portable terminal to exchange a message both through the SNEP and a user experience (UX) based on a GUI (Graphic User Interface). By using the Android Beam, an application of a portable terminal can easily share such as a web page, personal information, media file, and location information, with another portable terminal.

A general communication method based on the NFC referenced by SNEP standard specification is to exchange an NDEF message between two portable terminals named server and client. In relation to such a communication method, the specification does not mention an application executed in the portable terminals. However, a client application for transmitting a message and a server application for interpreting a received message must be executed in each portable terminal. Accordingly, both terminals execute identical applications, and exchanges a message designated by them in a corresponding application.

Android Beam provides a function of automatically executing an application in a receiving terminal. A scenario in a transmitting terminal is similar to the above communication method. Namely, an application transmitting a message must be executed in the transmitting terminal. This application performs a role of transmitting a message if both terminals contact each other. The message may be properly configured according to the context of the application. For example, current location information is configured as a message in a map application, and a currently displayed web page or a Uniform Resource Locator (URL) of a media file is configured as a message in a web browser. Additionally in the Android Beam, "Touch to Beam" User Interface (UI) is provided for an application of the transmitting terminal. This is a method for receiving a confirmation from a user in advance of transmitting a message. If the transmitting terminal and the receiving terminal contact each other, the screen of the transmitting terminal is switched to a screen requesting the user's confirmation on the transmission. If the user touches the screen, the message is transmitted. In the meantime, a receiving application may not be executed in the receiving terminal. Namely, the receiving terminal automatically executes the receiving application even though a message is received in an idle state of not executing the receiving application. The receiving terminal transmits the reception of the message to the receiving application. The receiving application then performs a predetermined operation according to the content of the message. For example, if a map application receives location information, the map application displays a map of the corresponding location, and the browser displays a web page or a media by connecting to a received URL.

In the Android Beam, at least one transmitting application must be executed in the foreground of the transmitting terminal. Accordingly, only one message is transmitted to the receiving terminal, and thereby such a method causes inconveniences in a scenario of a user who wants to perform a plurality of tasks. For example, if a user of a transmitting side wants to perform tasks such as an exchange of visit card, friend request in Facebook, and friendship expectation in Kakao Talk, the user must execute a visit card application, Facebook, and Kakao Talk in sequence and contact the terminal each time.

The applicant of the present disclosure intends to solve the problems in the conventional technology through the present disclosure. The present disclosure suggests an apparatus and a method enabling transmission of a message by contacting with a receiving terminal even though a transmitting terminal does not execute a transmitting application in the foreground. Further, the present disclosure suggests an apparatus and a method enabling transmission of a plurality of messages when the transmitting terminal contacts with the receiving terminal. Further, the present disclosure suggests an apparatus and a method enabling performance of multiple operations designated in a receiving message without causing user's inconvenience.

### SUMMARY

To address the above-discussed deficiencies of the prior art, it is a primary object to provide a method for communicating data with an external device by using an NFC (Near Field Communication) module in a portable terminal having the NFC module includes: detecting a notification event from the NFC module notifying contact of the external device, deciding whether a preregistered message to be transmitted to the external device exists in a storage unit if the notification event is detected, and controlling the NFC module to transmit the preregistered message to the external device if the preregistered message exists in the storage unit.

According to another exemplary embodiment of the present disclosure, a method for communicating data with an external device by using an NFC (Near Field Communication) module in a portable terminal having the NFC module includes: receiving messages from the external device through the NFC module, displaying identifier information of applications corresponding to each message, detecting a user's selection selecting one of the identifier information, and processing a message corresponding to the selected identifier information by executing an application corresponding to the selected identifier information.

According to another exemplary embodiment of the present disclosure, a portable terminal includes: an NFC (Near Field Communication) module, a storage unit storing a preregistered message to be transmitted to an external device through the NFC module, and a control unit detecting a notification event from the NFC module notifying contact of the external device and controlling the NFC module to transmit the preregistered message to the external device in response to the notification event.

According to another exemplary embodiment of the present disclosure, a portable terminal includes: an NFC(Near Field Communication) module receiving messages from an external device, a display unit displaying identifier information of applications corresponding to the messages received from the external device through the NFC module, and a control unit detecting a user's selection selecting one of the identifier information, and processing a message corresponding to the selected identifier information by executing an application corresponding to the selected identifier information.

As described above, an apparatus and a method for communicating data in a portable terminal having an NFC module according to the present disclosure enables transmission of a preregistered message by contacting with a receiving terminal without having to executing a transmission application in the foreground of a transmitting terminal. Further, a plurality of messages can be transmitted by contacting the transmitting terminal with the receiving terminal. Therefore, the present disclosure provides execution of various operations designated in a receiving message without user's inconvenience.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" or "control unit" means any device, system or part thereof that controls at least one operation, such a device may be implemented in hardware, firmware or software, or some combination of at least two of the same. It should be noted that the functionality associated with any particular controller or control unit may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block diagram of a portable terminal according to the present disclosure;

FIGS. 2 to 4 illustrate an example of a Simple NDEF Exchange Protocol (SNEP) communication;

FIG. 5 illustrates a flow chart of a preregistration method of an NDEF message according to an exemplary embodiment of the present disclosure;

FIGS. 6 to 8 illustrate examples of an NDEF message;

FIG. 9 illustrates a flow chart of a method of transmitting an NDEF message according to an exemplary embodiment of the present disclosure;

FIG. 10 illustrates a flow chart of a data communication method through negotiation according to an exemplary embodiment of the present disclosure;

FIG.11 illustrates a flow chart of a method of receiving an NDEF message according to an exemplary embodiment of the present disclosure; and

FIGs. 12a and 12b illustrate drawing for explaining a method of informing an NDEF message to a receiver.

### DETAILED DESCRIPTION

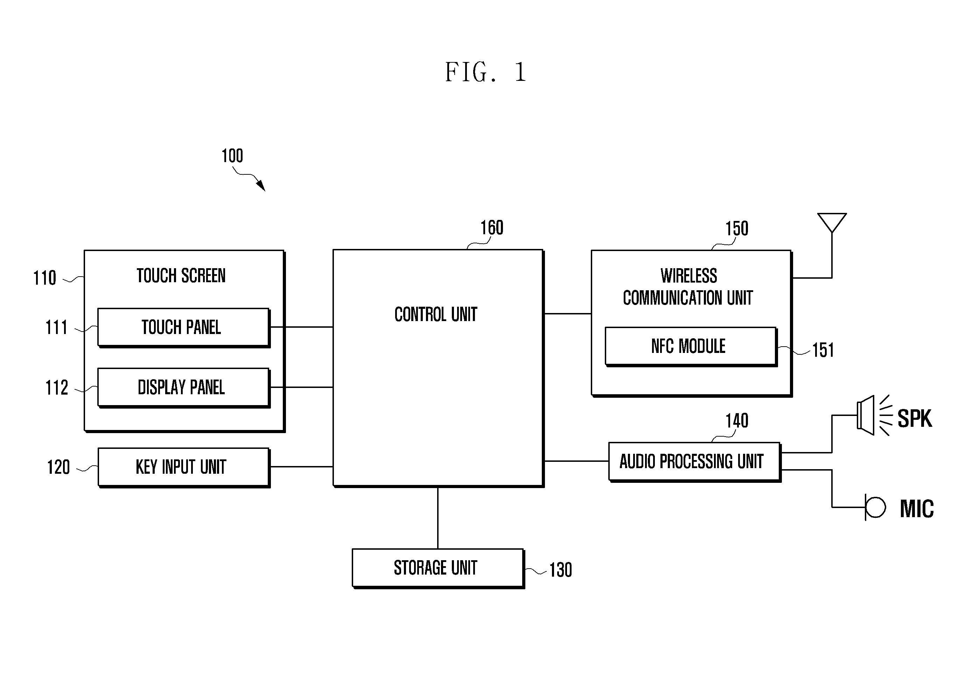

FIGURES 1 through 12b, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. An apparatus and a method according to the present disclosure are applied to a portable terminal having an NFC module. For example, the portable terminal may be a smart phone, tablet PC, or notebook PC. The portable terminal exchanges a message through the NFC module. Hereafter, a transmitting terminal means a portable terminal transmitting a message and a receiving terminal means a portable terminal receiving a message. In the meantime, the portable terminal may be a client or a server. Namely, the client is a portable terminal transmitting a "request message" to another portable terminal (i.e. server) and the server is a portable terminal responsively transmitting a "response message" to the client.

Hereinafter, exemplary embodiments of the present disclosure are described in detail with reference to the accompanying drawings. The same reference symbols are used throughout the drawings to refer to the same or like parts. Detailed descriptions of well-known functions and structures incorporated herein may be omitted to avoid obscuring the subject matter of the present disclosure.

FIG. 1 illustrates a block diagram of a portable terminal 100 according to the present disclosure. Referring to FIG. 1, the portable terminal 100 includes a touch screen 110, key input unit 120, storage unit 130, audio processing unit 140, speaker SPK, microphone MIC, wireless communication unit 150, and control unit 160.

The touch screen 110 performs functions of an input unit and a display unit for interaction with a user. Namely, the touch screen 110 is configured with a touch panel 111 and a display panel 112. The touch panel 111 may be placed on the display panel 112. The touch panel 111 generates an analog signal (for example, touch event) in response to a user's gesture on the touch panel 111, transmits a digital signal to the control unit 160 by converting the analog signal to the digital signal. The control unit 160 detects the user's gesture from the transmitted touch event. The user's gesture is divided into a touch and a touch gesture. The touch gesture may include a tap, drag, and flick. Namely, the touch means a state of contacting with a touch screen and the touch gesture means a movement of the touch from a touch-on to a touch-off on the touch screen. The touch panel 111 may be a complex touch panel configured with a hand touch panel detecting a hand gesture and a pen touch panel detecting a pen gesture. Here, the hand touch panel may be configured in a capacitive type. Alternatively, the hand touch panel may be configured in a resistive type, infrared type, or ultrasonic type. The hand touch panel generates a touch event not only for a user's hand gesture but also for other objects (for example, an object made of a conductive material giving a conductivity change). The pen touch panel may be configured in an electromagnetic induction type. Accordingly, the pen touch panel generates a touch event by using a stylus pen specially manufactured to form a magnetic field. The display panel 112 converts image data received from the control unit 160 to an analog signal and displays an image of the analog signal under the control of the control unit 160. Namely, the display panel 112 may display various screens such as a locking screen, home screen, application execution screen, and keypad according to the usage of the portable terminal. The display panel 112 may be configured with an LCD (Liquid Crystal Display), OLED (Organic Light Emitted Diode), or AMOLED (Active Matrix Organic Light Emitted Diode).

The key input unit 120 includes a plurality of keys (buttons) for receiving information of a numeral or a character and for setting various functions. The key may include a call menu key, screen on/off key, power on/off key, and volume control key. The key input unit 120 generates a key event related to a user's setting and a function control of the portable terminal, and transmits the event to the control unit 160. The key event may include a power on/off event, volume control event, and screen on/off event. The control unit 160 controls the above components in response to the key event. Here, a key (button) of the key input unit 120 may be named as hard key and key (button) displayed in the touch screen 110 may be named as soft key.

The storage unit 130 is a secondary memory unit and may include such as an NAND flash memory. The storage unit 130 stores data generated by the portable terminal 100 (for example, a sound record file) or received from external source through the wireless communication unit 150 (for example, a music file, and video file) under the control of the control unit 160. The storage unit 130 stores an OS (Operating System) for driving the portable terminal 100 and various programs. In particular, the storage unit 130 stores a data communication program using an NFC. The data communication program using an NFC according to the present disclosure includes a function of preregistering a message, function of transmitting the preregistered message to a receiving terminal even though a transmission application is not executing while contacting with the receiving terminal, function of transmitting the registered messages by multiplexing if a plurality of preregistered messages exists, function of asynchronously processing individual messages extracted from the received multiplex message, function of transmitting to the receiving terminal only the messages processable by the receiving terminal among a plurality of messages. Here, the "asynchronously processing" means notifying a user a plurality of received messages as an individually divided message and executing an operation according to a message selected by the user from the plurality of messages.

The storage unit 130 may include an embedded application and a third party application. The embedded application means an application basically installed in the portable terminal. For example, the application may be an environment setting program, browser, email, and instant messenger. As well known, the third party application means various applications installable in the portable terminal 100 by downloading from an online market. Such a third party application may be freely installed or uninstalled. If the portable terminal 100 is switched on, a booting program is firstly loaded into a main memory (for example, RAM) of the control unit 160. The booting program loads an operating program into the main memory to operate the portable terminal. The operating system then loads various programs into the main memory and executes the programs. In particular, the operating system loads the data communication program into the main memory and executes the program if a contact of an external device is detected. The booting and loading of a program is well known in the prior art, and therefore detailed description will be omitted.

The audio processing unit 140 operates with a speaker SPK and a microphone MIC and performs a function of inputting and outputting an audio signal for voice recognition, voice recording, digital recording, and telephone conversation. The audio processing unit 140 receives audio data from the control unit 160, and outputs an analog signal to the speaker SPK after converting the received audio data to the analog signal. The audio processing unit 140 receives an analog signal from the microphone MIC, and transmits audio data to the control unit 160 after converting the received analog signal to the audio data. The speaker SPK outputs a sound wave by converting the analog signal received from the audio processing unit 140 to the sound wave. The microphone MIC converts a sound wave received from a human being or other sound sources to an analog signal.

The wireless communication unit 150 performs a wireless communication with an external device. The wireless communication unit 150 supports at least one of a GSM (Global System for Mobile Communication) network, EDGE (Enhanced Data GSM Environment) network, CDMA (Code Division Multiple Access) network, W-CDMA (W-Code Division Multiple Access) network, LTE (Long Term Evolution) network, and OFDMA (Orthogonal Frequency Division Multiple Access) network. The wireless communication unit 150 includes an NFC module 151. The NFC module 151 performs a data communication with another portable terminal 100 by using a frequency band allocated to an NFC (for example, 13.56MHz). The NFC module 151 periodically emits an RF signal under the control of the control unit 160. The RF signal is a signal for informing existence of the portable terminal 100 to another portable terminal. The NFC module 151 receives an RF signal from another portable terminal, and if the intensity of the received RF signal is greater than a preset critical value, identifies that another portable terminal has contacted and notifies the control unit 160 of the contact. The control unit 160 detects a notification message from the NFC module 151, and controls the NFC module 151 to transmit data in response to the notification message.

The control unit 160 controls general operation of the portable terminal 100 and signal flows between internal components in the portable terminal, and performs a function of processing data. The control unit 160 may include a main memory unit storing application programs and an operating system, cache memory temporarily storing data to be written in the storage unit 130 and data read from the storage unit 130, CPU (central processing unit), and GPU (graphic processing unit). Here, the operating system performs a role of the interface between hardware and program, and manages computer resources such as a CPU, GPU, main memory, and auxiliary memory. Namely, the operating system operates the portable terminal, decides the order of tasks, and controls computing of the CPU and the GPU. Further, the operating system performs a function of controlling execution of application programs and managing storage of data and files. As well known, the CPU is an essential control unit of a computer system performing computing and comparing data, and performing interpreting and executing a command. The GPU is a graphic control unit sharing the role of the CPU, and performs computing and comparing graphic data, and interpreting and executing a command related to the graphics. The CPU and the GPU each may be integrated into a package having more than one individual core (for example, quad-core) formed in a single integrated circuit. Further, the CPU and the GPU may be integrated into a single chip as a System on Chip (SoC) or packaged in a multi-layer. The configuration including a CPU and a GPU may be called an Application Processor (AP).

In particular, the control unit 160 according to the present disclosure performs a function of controlling NFC based data communication by executing the data communication program, if another portable terminal is contacted. Hereafter, details of an exemplary embodiment related to the function of the control unit 160 will be described referring to the attached drawings.

Even though all the variations cannot be listed here due to a convergence trend changing very fast, the portable terminal according to the present disclosure may further include components not described above, such as an Wi-Fi communication module, GPS module, Bluetooth communication module, vibration motor, camera, acceleration sensor, gyro sensor, and wired communication unit for communicating with an external device (for example, PC) through a cable. Further, in the portable terminal according to the present disclosure, a specific component may be excluded or replaced from the above configuration according to the provision form.

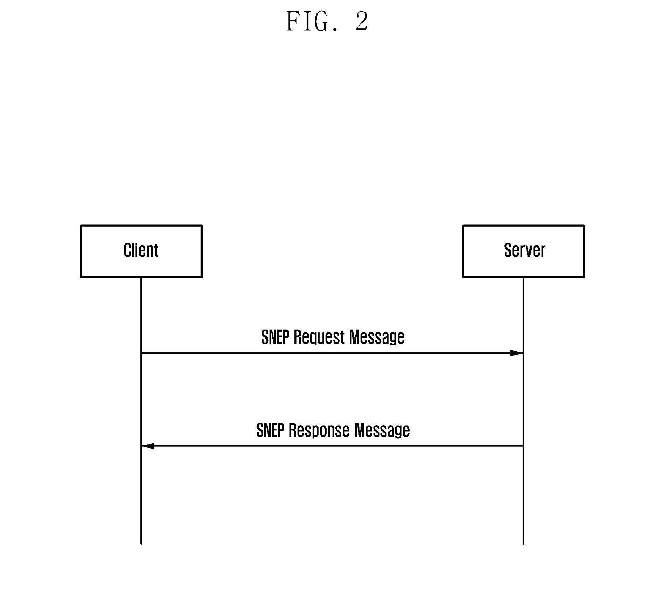

FIGS. 2 to 4 illustrate drawings for explaining SNEP communication. Referring to FIG. 2, The SNEP is a protocol of request and response. If a client is contacted with a server, the client transmits an SNEP request message to the server. The server transmits an SNEP response message to the client.

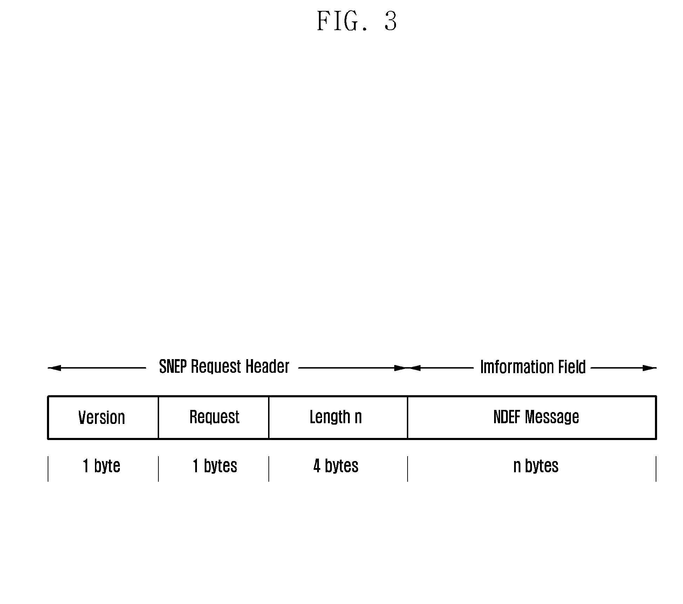

Referring to FIG. 3, the SNEP request message includes an SNEP request header and an information field). The SNEP request header includes a protocol version, the lengths of a request field and the information field. Here, the request field may include a 'Continue' meaning "Send remaining fragments", 'Get' meaning "Return NDEF message", 'Put' meaning "Receive and process NDEF message", and 'Reject' meaning "Don't send remaining fragments". The server performs a function (for example, displaying a web page) according to the request field (for example, 'Put') by using information (for example, URL information) received from the client. The server transmits an SNEP response message to the client. The SNEP response message includes an SNEP response header and an information field. The SNEP response header includes a protocol version, the lengths of a response field and the information filed. The response field may include a 'Continue' meaning "Send remaining fragments", 'Success' meaning "Execution of function succeeded", and 'Reject' meaning "Don't send remaining fragments".

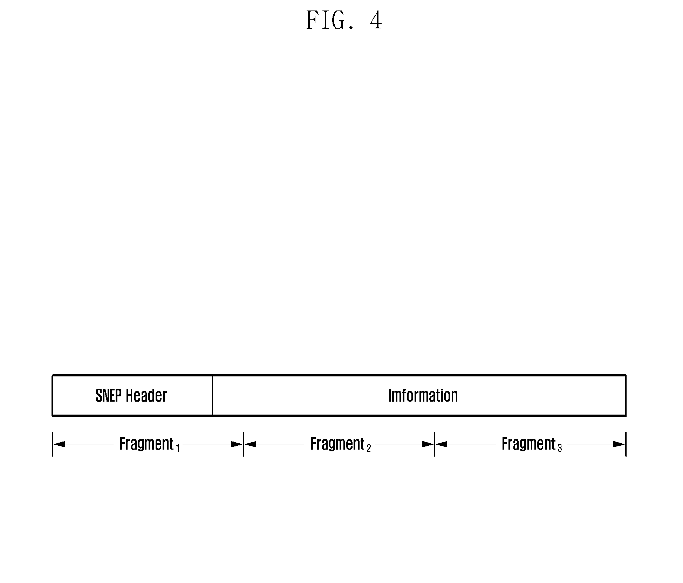

The object of the SNEP is to exchange an NDEF message. The NDEF message is transferred by including in the information filed of SNEP request message or response message. The SNEP request message and the response message may be transferred at once, or, as illustrate in FIG. 4, transferred individually by separating into a plurality of fragments (for example, 3 fragments). For example, the client transmits a first fragment of the SNEP request message to the server. The server transmits an SNEP response message (response field: "Continue") to the client in response to the reception of the first segment. The client then transmits remaining fragments of the SNEP request message sequentially to the server.

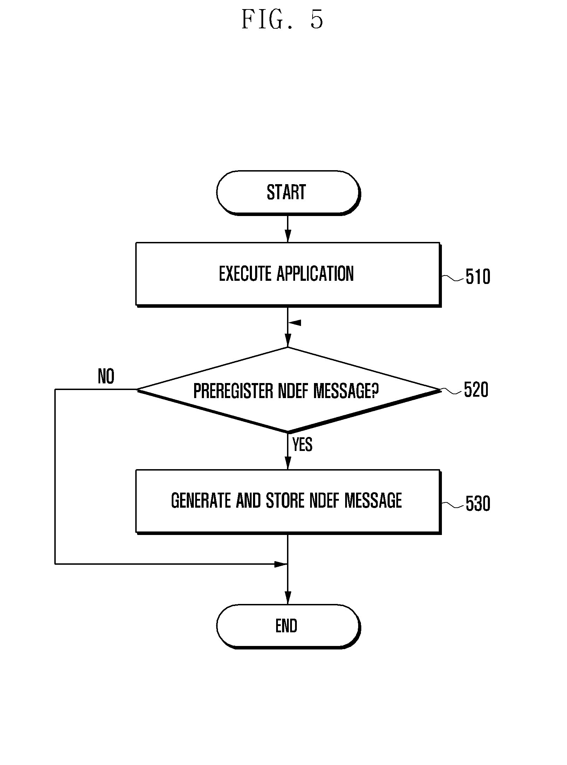

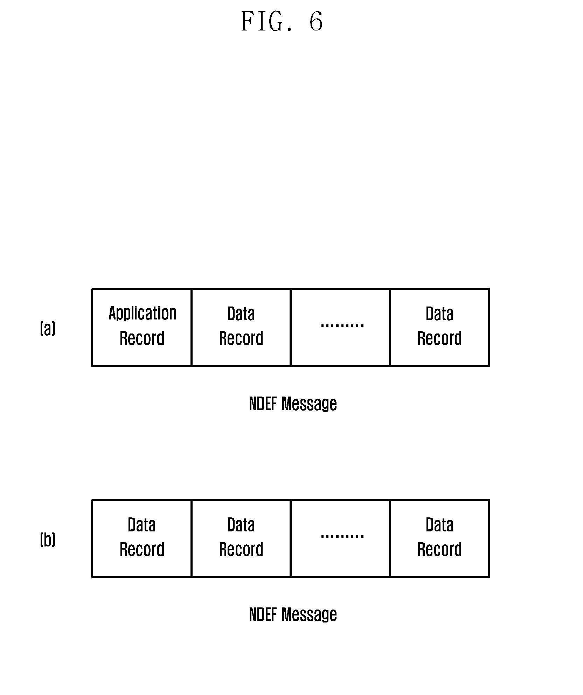

FIG. 5 illustrates a flow chart of a preregistration method of an NDEF message according to an exemplary embodiment of the present disclosure. FIGS. 6 to 8 illustrate drawings for explaining an NDEF message.

Referring to FIG. 5, the touch screen 110 may display a home screen under the control of the control unit 160. The control unit 160 may detect an event (for example, tapping an environment setting icon) requesting execution of an application (for example, an environment setting program) from the touch screen 110. The control unit 160 executes a corresponding application in response to a request event (510). Here, the application may configure a transferring message in a method provided by a platform (for example, a manifest file, and runtime API). The touch screen 110 may display an application execution screen under the control of the control unit 160. The control unit 160 detects an event requesting preregistration of an NDEF message (for example, tapping "message registration button" in the environment setting screen) from the touch screen 110 (520). If a request event is detected, the control unit 160 controls the touch screen 110 to display a registration screen for message registration. A user may set a message to be transferred through the registration screen (for example, an electronic visit card and a profile photograph). The control unit 160 generates an NDEF message and stores the NDEF message in the storage unit 130 (530). For example, the NDEF message registered by the user through the registration screen may include a text, image, data such as a moving image, identification information of an application for processing data, description related to the data (for example, friend request in Facebook).

Referring to FIG. 6a, the NDEF message is a basic message defined by the specification of the NFC Data Exchange Format (NDEF). The NDEF message includes at least one data record and an application record related to the data record. An application specified in the application record processes the data record. Referring to FIG. 6b, if the object of reception is set to all the available application processing the data record not but the specific application, the NDEF message may not include the application record. In this case, type information of the data (for example, JPEG, Text, and vcard) may be included in the data record. The receiving terminal may decide an application to process the data referring to the type information.

If only one NDEF message is received from the transmitting terminal through the NFC module 151, the control unit 160 of the receiving terminal may directly (synchronously) process the NDEF message by executing a corresponding application. If a plurality of NDEF messages is received from the transmitting terminal through the NFC module 151, the control unit 160 of the receiving terminal may asynchronously process the NDEF message.

The transmitting terminal may transmit a plurality of NDEF messages to the receiving terminal at once by multiplexing (packaging) the plurality of NDEF messages into a multiple NDEF message (Multiplexed NDEF Message). For example, the control unit 160 may control the NFC module 151 to read a plurality of registered NDEF messages from the storage unit 130, to integrate them into a single message, and to transmit the multiple NDEF message to the receiving terminal. Here, the plurality of NDEF messages may be stored in the storage unit 130 in a state of pre-multiplexed. For example, the control unit 160 may generate an NDEF message in Step 530, integrate the generated NDEF message with an existing NDEF message into one message, and store the integrated message in the storage unit 130. Further, the control unit 160 may generate a plurality of NDEF messages in Step 530, integrate them into one message, and store the integrated message in the storage unit 130. Such a method of transmitting multiplex NDEF message requires no modification of SNEP standard, and may be compatible with devices receiving and processing a single NDEF message. Namely, the transmitting terminal transmits the multiple NDEF message in the same way as the single NDEF message (refer to FIG. 6a and 6b). However, the multiple NDEF message may be transmitted by dividing into a plurality of fragments (refer to FIG. 4).

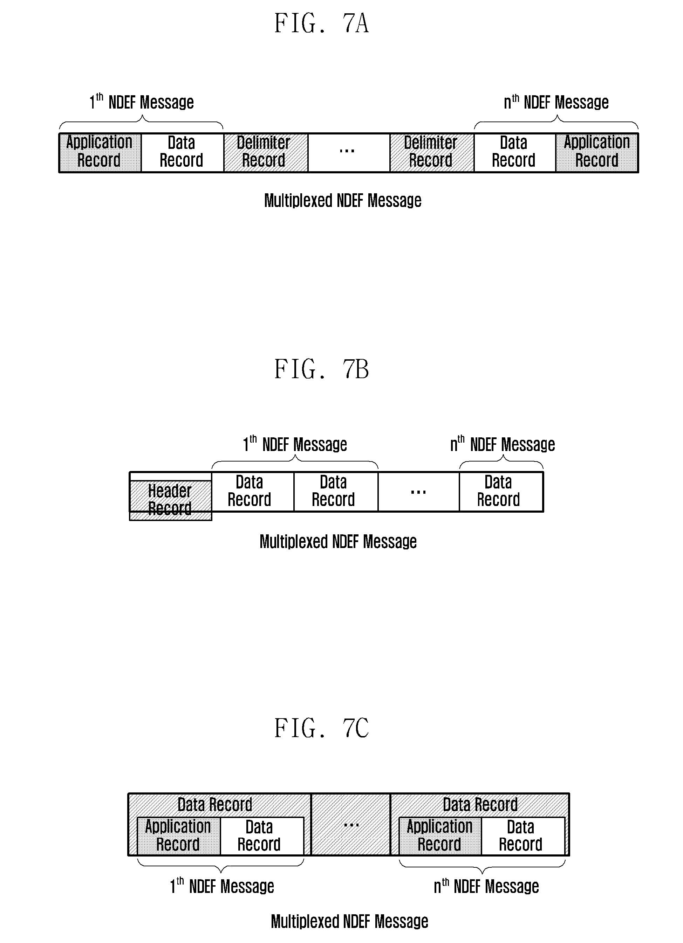

Referring to FIG. 7a, the multiple NDEF message may include a plurality of NDEF messages and delimiter records dividing them. The control unit 160 of the receiving terminal receives an NDEF message from the transmitting terminal through the NFC module 151, and if a delimiter record exists in the received NDEF message, the control unit 160 identifies that the received NDEF message is a multiple NDEF message, and distinguishes a plurality of NDEF messages by using the delimiter records.

Referring to FIG. 7b, the multiple NDEF message may include a plurality of NDEF messages and a header record summarizing them. The control unit 160 of the receiving terminal receives an NDEF message from the transmitting terminal through the NFC module 151, and if a header record exists in the received NDEF message, the control unit 160 identifies that the received NDEF message is a multiple NDEF message, and distinguishes a plurality of NDEF messages by analyzing the header record.

Referring to FIG. 7c, the multiple NDEF message includes a plurality of data records. The NDEF message is embedded in each data record. The control unit 160 of the receiving terminal receives an NDEF message from the transmitting terminal through the NFC module 151, and if the received NDEF message includes a plurality of data records, the control unit 160 parses at least one of the data records. If an NDEF message is embedded in the analyzed data record, the control unit 160 identifies that the received NDEF message is a multiple NDEF message, and distinguishes each data record as an NDEF message.

The transmitting terminal may transmit a plurality of NDEF messages individually to the receiving terminal without multiplexing the plurality of NDEF messages. In such a method of transmitting NDEF messages individually, the transmitting terminal may decide NDEF messages to be transmitted by negotiating with the receiving terminal in advance. Such a negotiation may be applied to the above multiplexing transmission method. For example, the control unit 160 of the transmitting terminal may decide NDEF messages to be transmitted by negotiating with the receiving terminal, integrate the decided NDEF messages into a multiplex message, and control the NFC module 151 to transmit the multiplex message to the receiving terminal.

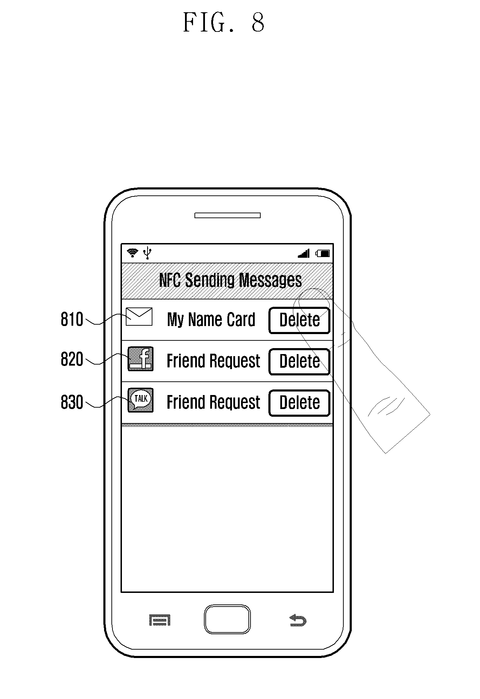

The control unit 160 may provide a management screen to a user so that the user can manage preregistered NDEF messages. For example, referring to FIG. 8, the touch screen 110 displays the management screen under the control of the control unit 160. Such a management screen includes identifiers (for example, 810 to 830) corresponding to the NDEF messages. The touch screen 110 may display 'Delete' buttons corresponding to each identifier. If a 'Delete' button is selected by the user (for example, by tapping), the control unit 160 deletes a corresponding identifier in the management screen and deletes a corresponding NDEF message in the storage unit 130.

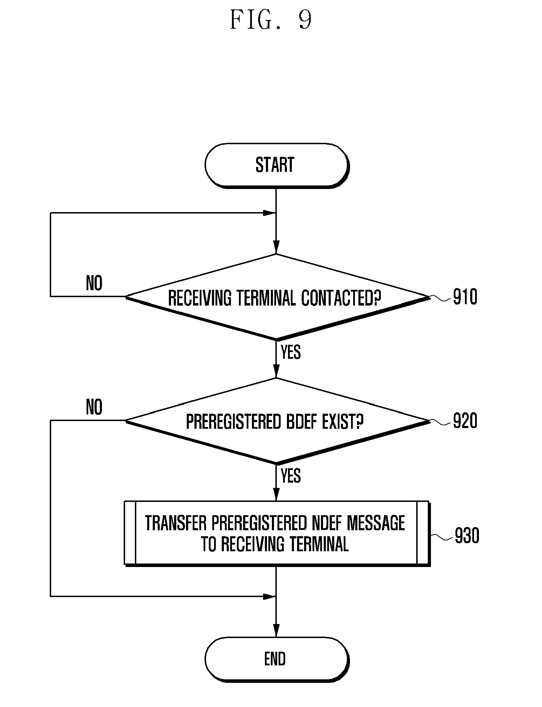

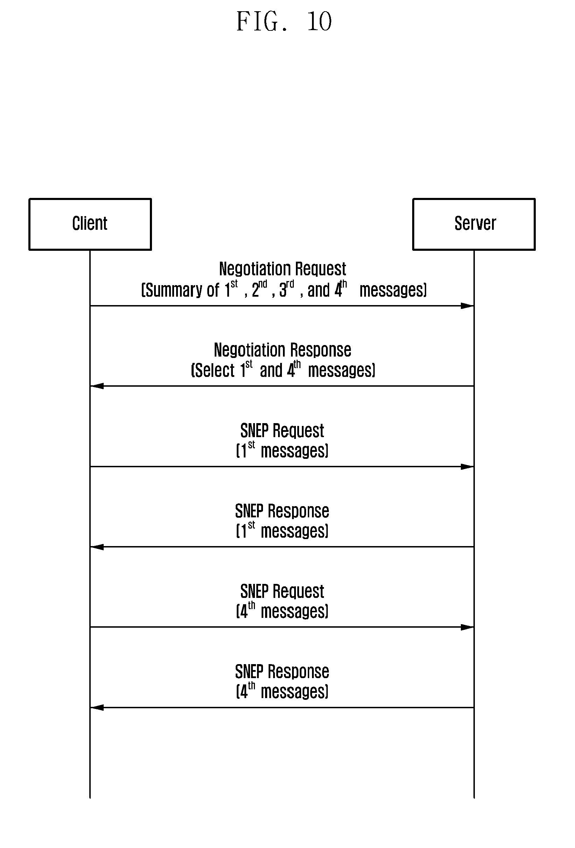

FIG. 9 illustrates a flow chart of a method of transmitting an NDEF message according to an exemplary embodiment of the present disclosure. FIG. 10 is a detailed drawing of Step 930 of FIG. 10. Namely, FIG. 10 illustrates a flow chart of a data communication method through negotiation according to an exemplary embodiment of the present disclosure.

Referring to FIG. 9, the control unit 160 detects a notification event informing a contact of an external device from the NFC module 151 (910).

If a notification event is detected, the control unit 160 searches the storage unit 130 and identifies whether a preregistered NDEF message exists in the storage unit 130 (920).

If a preregistered NDEF message exists, the control unit 160 reads the preregistered NDEF message from storage unit 130, and controls the NFC module 151 to transmit the read NDEF message to the external device (i.e. receiving terminal) (930).

If a plurality of preregistered NDEF messages exists, the control unit 160 multiplexes the NDEF message and controls the NFC module 151 to transmit them in Step 930 as described above. Of course, the NDEF message may be transmitted individually.

If a plurality of registered NDEF messages exists, the control unit 160 may decide NDEF message to be transmitted in Step 930 by negotiating with the receiving terminal. If a plurality of NDEF messages are decided, the plurality of NDEF messages may be transmitted by multiplexing. Of course the plurality of NDEF messages may be transmitted individually. Referring to FIG. 10, a client transmits a negotiation request message to a server. The negotiation request message includes NDEF messages (for example, 4 messages) and a summary. The summary may include identification information of an application or information of data type. A request filed of the negotiation request message may be a 'Get'. Accordingly, the server can transmit the negotiation response message to the client. The negotiation response message includes selection information (for example, selection of the first and fourth NDEF message). The client firstly transmits a SNEP request message including the NDEF message to the server. The server transmits an SNEP response message to the client confirming that the first NDEF message is received. Subsequently, the client transmits an SNEP request message including the fourth NDEF message to the server. The server transmits another SNEP response message to the client confirming that the fourth NDEF message is received.

As described above, the receiving terminal (server) may negotiate with the transmitting terminal (client) to receive only the NDEF messages that are processable by the receiving terminal. Even though the receiving terminal receives all the NDEF messages, NDEF messages of unavailable application cannot be processed. Namely, in the process of negotiating with the transmitting terminal, the receiving terminal transmits to the transmitting terminal a response message of NDEF message selection information meaning "Refuse to receive NDEF messages corresponding to an unavailable application" (for example, the first and fourth NDEF message selected among the 4 NDEF messages). In the meantime, the receiving terminal may transmits a response message refusing reception of corresponding NDEF messages in the negotiation process with the transmitting terminal if the size of NDEF message is too great (for example, the size of data is greater than 100MB). Instead, the receiving terminal may transmit to the transmitting terminal a request message asking to transmit the data by using another short-range communication method (for example, Wi-Fi, and Bluetooth). Accordingly, the transmitting terminal transmits the data to the receiving terminal not by an NFC module but by another short-range communication module (for example, Wi-Fi module, and Bluetooth module). Namely, in case of a message having too great size, transmission of data may be switched from the NFC transmission method to another short-range communication.

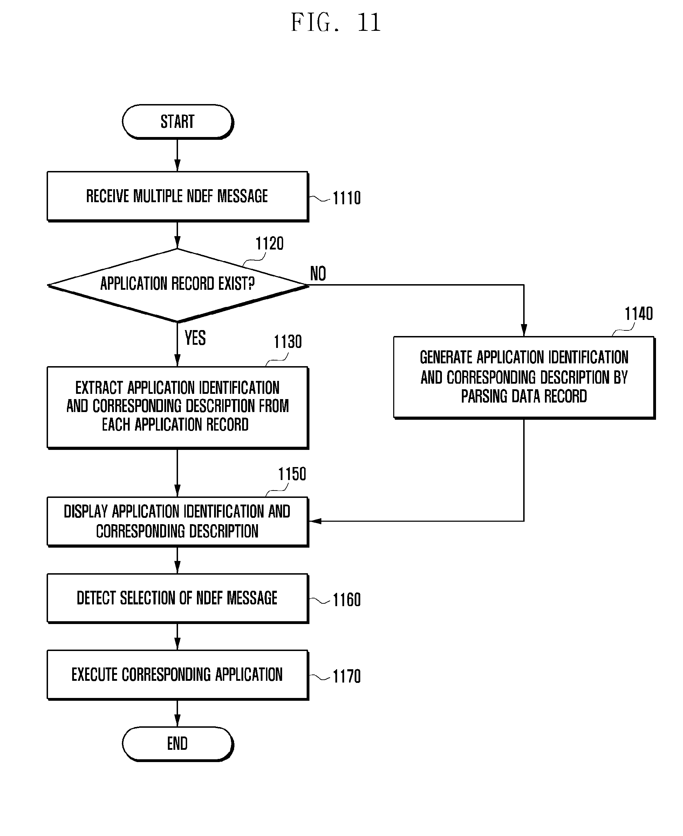

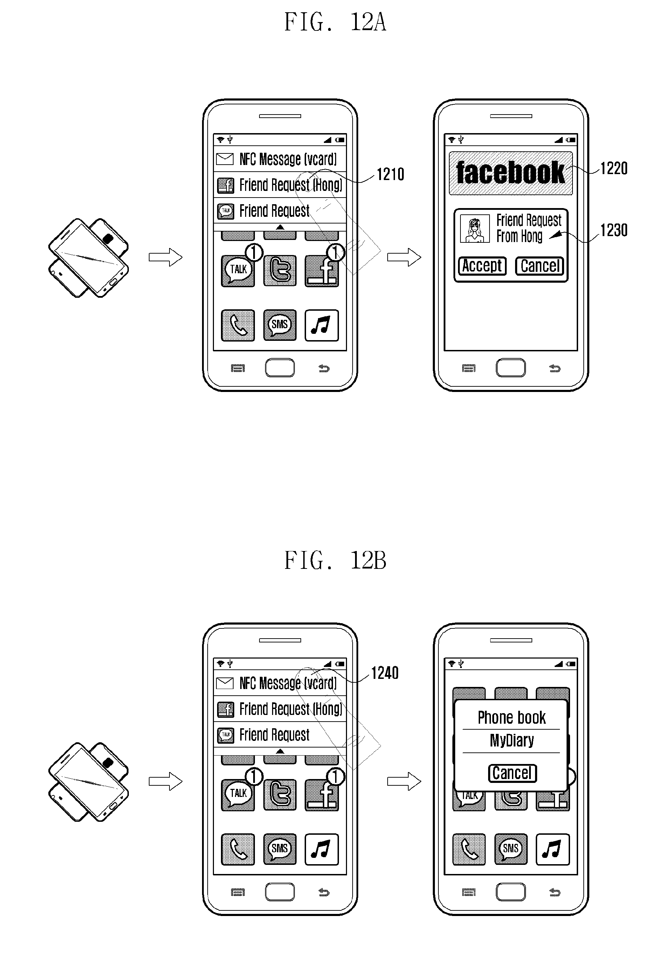

FIG.11 illustrates a flow chart of a method of receiving an NDEF message according to an exemplary embodiment of the present disclosure. FIGs. 12a-12b illustrate drawings for explaining a method of informing an NDEF message to a receiver. Referring to FIG. 11, the control unit 160 receives a plurality of NDEF messages from an external device (i.e. transmitting terminal) through the NFC module 151 (1110). The plurality of NDEF messages may be received in a multiplexed state as described above (refer to FIG. 7). Of course, the plurality of NDEF messages may be received individually. Further, Step 1110 may include the above negotiation process (refer to FIG. 10).

The control unit 160 identifies whether an application record exists in the NDEF messages (1120). For example, the content of the application record is as follows.

* Type name format: external

* Type name: bada.com: application

* Payload: appID=01ab23cd45&description=Friend Request from Hong

If a plurality of application records exists, the control unit 160 extracts application identifier information (for example, 01ab23cd45) and descriptions corresponding to the NDEF messages (for example, Friend Request from Hong) from the plurality of application records (1130).

If a plurality of application records does not exist, the control unit 160 generates application identification information and descriptions corresponding to the NDEF messages by using data records (1140). If an NDEF message has no application record, the control unit 160 identifies type information (for example, JPEG, text, and vcard) from at least one data record of the corresponding NDEF message, and identifies whether an application corresponding to the identified type information is available in the applications installed in the portable terminal. If an application corresponding to the identified type information is available, the control unit 160 generates identification information of the corresponding application. Here, the identification information may be generated for a plurality of applications. For example, if the type information is a vcard, applications for processing the information may be a phonebook application and a diary application. Further, the control unit 160 may generate descriptions corresponding to the generated identification information.

The control unit 160 controls the touch screen 110 to display the identifier information and descriptions corresponding to each application (1150). Here, the identification information (for example, 01ab23cd45) in the application record may be identified by the portable terminal 100 but not by a user. Accordingly, the control unit 160 controls to display identification information recognizable by the user (for example, a name of corresponding application or a thumbnail) instead of the extracted identification information. Referring to FIG. 12a, the touch screen 110 displays a first identifier 1210 corresponding to a first NDEF message. Here, it is assumed that the first NDEF message includes an application record. If the first identifier 1210 is selected (for example, by tapping), the touch screen 110 displays identification information 1220 recognizable by the user under the control of the control unit 160, instead of the identification information extracted from the application record of the first NDEF message. Further, the touch screen 110 may display a description 1230 extracted from the application record. Referring to FIG. 12b, the touch screen 110 displays a second identifier 1240 corresponding to a second NDEF message. Here, it is assumed that the second NDEF message does not include an application record. The control unit 160 then generates application identification information by analyzing a data record of the second NDEF message. If the second identifier 1240 is selected by the user (for example, by tapping), the touch screen 110 displays the generated identification information (for example, "Phonebook" and "MyDiary") under the control of the control unit 160. Further, the control unit 160 may control the audio processing unit 140 to output a voice guide "Message arrived" in Step 1150. Further, the control unit 160 may control a vibration motor to shake the portable terminal.

The control unit 160 detects a selection of NDEF message from the touch screen 110 (for example, tapping "Accept" in FIG. 12a, and tapping "Phonebook" or "MyDiary" in FIG. 12b) (1160). If a selection of NDEF message is detected, the control unit 160 executes a corresponding application (1170).

As described above, the method according to the present disclosure is provided in a program command form which can be executed in various computer means and can be recorded in a recording media readable in a computer. Here, the recording media readable in a computer includes a program command, data file, data structure, or their combination. The program command recorded in the recording media may be a program command specially designed for the present disclosure or any computer software disclosed to those skilled in the art. The recording media readable in a computer includes a hardware device specially configured for storing and executing a program command, such as a hard disk, magnetic media (floppy disk and magnetic tape), optical media (CD-ROM and DVD), magneto-optical media (floptical disk), ROM, RAM, and flash memory. The program command further includes a machine code generated by a compiler and a high level language code executable in a computer by using an interpreter. The hardware device may be configured with at least one software module to perform the operation according to the present disclosure.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for communicating data with an external device by using a Near Field Communication (NFC) module in a portable terminal including the NFC module, the method comprising:
detecting a notification event from the NFC module notifying contact with the external device;
determining whether a preregistered message to be transmitted to the external device is present in a storage unit in response to the notification event being detected; and
controlling the NFC module to transmit the preregistered message to the external device in response to determining that the preregistered message is present in the storage unit.

2. The method of claim 1, wherein controlling the NFC module comprises controlling to transmit a negotiation request message for negotiating transmission of each preregistered message to the external device in response to determining that a plurality of preregistered messages are present, receiving a negotiation response message from the external device using the NFC module, selecting a message to be transmitted to the external device based on the negotiation response message, and controlling the NFC module to transmit the selected message to the external device.

3. The method of claim 2, wherein controlling the NFC module further comprises integrating a plurality of selected messages into a multiple message in response to determining that the plurality of the selected messages are present, and controlling the NFC module to transmit the multiple message to the external device.

4. The method of claim 1, wherein the controlling the NFC module comprises integrating a plurality of preregistered messages into a multiple message in response to determining that the plurality of preregistered messages are present, and controlling the NFC module to transmit the multiple message to the external device.

5. The method of claim 4, wherein the multiple message is one of a message including the plurality of preregistered messages and a delimiter record dividing the plurality of preregistered messages, a message including the plurality of preregistered messages and a header record summarizing the plurality of preregistered messages, or a message including a plurality of data records each embedded with the plurality of the preregistered messages.

6. A method for communicating data with an external device by using a Near Field Communication (NFC) module in a portable terminal including the NFC module, the method comprising:
receiving messages from the external device using the NFC module;
displaying identifier information of applications corresponding to each message;
detecting a user selection selecting identifier information of one of the applications; and
processing a message corresponding to the selected identifier information by executing the one application corresponding to the selected identifier information.

7. The method of claim 6, wherein displaying the identifier information comprises extracting the identifier information of the applications and corresponding descriptions from application records included in each message.

8. The method of claim 6, wherein displaying identifier information comprises generating identifier information of an application using data records included in each message.

9. The method of claim 6, wherein receiving the messages comprises:
receiving a negotiation request message for negotiating reception of each of the messages from the external device using the NFC module;
controlling the NFC module to transmit a negotiation response message including message selection information; and
receiving a message corresponding to the message selection information from the external device using the NFC module.

10. A portable terminal comprising:
a Near Field Communication (NFC) module;
a storage unit configured to store a preregistered message to be transmitted to an external device using the NFC module; and
a control unit configured to detect a notification event from the NFC module notifying contact with the external device and control the NFC module to transmit the preregistered message to the external device in response to the notification event.

11. The portable terminal of claim 10, wherein the control unit is configured to control the NFC module to transmit a negotiation request message for negotiating transmission of each preregistered message to the external device in response to a plurality of the preregistered messages being present, receive a negotiation response message from the external device using the NFC module, select a message to be transmitted to the external device based on the negotiation response message, and control the NFC module to transmit the selected message to the external device.

12. The portable terminal of claim 10, wherein the control unit is configured to integrate a plurality of selected message into a multiple message in response to the plurality of the selected messages being present, and control the NFC module to transmit the multiple message to the external device.

13. The portable terminal of claim 10, wherein the control unit is configured to integrate a plurality of preregistered messages into a multiple message in response to the plurality of preregistered messages being present, and control the NFC module to transmit the multiple message to the external device.

14. A portable terminal comprising:
a Near Field Communication (NFC) module configured to receive messages from an external device;
a display unit configured to display identifier information of applications corresponding to the messages received from the external device using the NFC module; and
a control unit configured to detect a user selection selecting identifier information of one of the applications, and process a message corresponding to the selected identifier information by executing the one application corresponding to the selected identifier information.

15. The portable terminal of claim 14, wherein the control unit is configured to extract the identifier information of the applications and corresponding descriptions from application records included in each message, and control the display unit to display the extracted identifier information of applications and descriptions.
